# FASCICULE DE BREVET EUROPEEN

(11) **EP 2 024 424 B1**
(45) Date de publication et mention de la délivrance du brevet: **22.03.2017**
(21) Numéro de dépôt: 07734529.6
(22) Date de dépôt: 04.05.2007
(51) Int. Cl.: C08G 81/02, C08F 220/28, C08F 220/58, C04B 26/06

(54) **PROCEDE DE FABRICATION DE POLYMERES PEIGNE PAR SECHAGE PUIS FONCTIONNALISATION DE LA CHAINE PRINCIPALE METH(ACRYLIQUE), POLYMERES OBTENUS ET LEURS UTILISATIONS**
VERFAHREN ZUR HERSTELLUNG VON KAMMPOLYMEREN DURCH TROCKNEN UND NACHFOLGENDE FUNKTIONALISIERUNG DER METH(ACRYL)POLYMER-HAUPTKETTE, RESULTIERENDE POLYMERE UND VERWENDUNGEN DAVON
METHOD FOR MAKING COMB POLYMERS BY DRYING THEN FUNCTIONALIZATION OF THE METH(ACRYLIC)POLYMER BACKBONE, RESULTING POLYMERS AND USES THEREOF

(30) Priorité: 12.05.2006 FR 0604212
(43) Date de publication de la demande: 18.02.2009
(73) Titulaire: COATEX, 69730 Genay (FR)
(72) Inventeur: MORO, Jean, F-01600 Toussieux (FR); SUAU, Jean-Marc, F-69480 Lucenay (FR); KENSICHER, Yves, F-69620 Theize (FR)
(74) Mandataire: Balmefrezol, Ludovic Francis Pierre
(86) Numéro de dépôt international: PCT/IB2007/001219
(87) Numéro de publication internationale: WO 2007/132322

(56) Documents cités:
- WO-A2-02/066529
- FR-A1- 2 204 640
- US-A1- 2002 111 429

## Description

La présente invention concerne le secteur technique des polymères "peigne", utilisés dans des formulations contenant des matières minérales ou organiques, lesdites formulations étant soit des plastiques contenant des matières minérales ou organiques, soit des formulations aqueuses contenant des matières minérales ou organiques, et qui sont alors des dispersions et des suspensions aqueuses de matières minérales ou organiques, des compositions aqueuses à base de liants hydrauliques et contenant des matières minérales ou organiques, telles que les bétons, mortiers, laitiers, coulis, plâtres, mais aussi des peintures, des sauces de couchage papetières, des formulations cosmétiques et des formulations détergentes.

L'homme du métier, formulateur de polymères, désigne sous l'expression de polymères "peigne" les polymères dont la structure, similaire à celle d'un peigne, comporte une chaîne principale sur laquelle sont fixées des chaînes latérales qui peuvent être de nature et de longueur différentes.

Depuis de nombreuses années, il est bien connu que les polymères "peigne", disposant notamment d'une chaîne principale de nature (méth)acrylique sur laquelle sont fixés des groupements latéraux polyoxyalkylés, peuvent apporter aux compositions à base de liants hydrauliques et contenant des matières minérales ou organiques dans lesquelles ils sont incorporés, des propriétés intéressantes en terme de fluidité, de maniabilité ou encore de réduction de leur teneur en eau.

L'homme du métier connaît aujourd'hui 4 méthodes de préparation de ces polymères peigne :
- la copolymérisation, en présence de solvants organiques, de l'anhydride maléique avec un autre monomère hydrophobe tel que notamment le styrène, suivie du séchage éventuel du copolymère obtenu, puis de sa fonctionnalisation par des groupements alcoxy polyoxyalkylène glycol ou alcoxy polyoxyalkylène amine,
- la copolymérisation en solution aqueuse ou en présence de solvants d'un monomère (méth)acrylique avec un macromonomère du type polyéther (méth)acrylique, ledit monomère et ledit macromonomère étant apportés en solution,
- la copolymérisation en solution aqueuse ou en présence de solvants d'un monomère (méth)acrylique avec un macromonomère vinylique disposant de chaînes pendantes oxyalkylées, ledit monomère et ledit macromonomère étant apportés en solution,
- l'estérification ou l'amidification d'un homopolymère ou d'un copolymère de l'acide (méth)acrylique, l'homopolymère ou le copolymère de l'acide (méth)acrylique étant apportés en solution, puis mélangés, ledit mélange étant ensuite séché avant que ne commencent les réactions d'estérification ou d'amidification.

La première et la plus ancienne de ces méthodes consiste à réaliser un copolymère de l'anhydride maléique avec un autre monomère hydrophobe tel que notamment le styrène (mais aussi le di-isobutylène, l'isobutylène ou le méthyl vinyl éther), sur lequel sont greffées des chaînes latérales oxyalkylées. Ledit copolymère de l'anhydride maléique avec un autre monomère hydrophobe est dans un premier temps synthétisé en présence d'un solvant organique tel que le toluène ou la méthyl éthyl cétone. Le greffage du maillon oxyalkylé intervient ensuite sur le copolymère précédemment obtenu et qui est soit à l'état sec, soit à l'état de solution.

Le document WO 97 / 39037 décrit de tels polymères et indique qu'ils peuvent être mis en oeuvre dans des compositions cimentaires, notamment pour en améliorer la fluidité. La méthode de synthèse associée à de tels polymères présente l'inconvénient de faire appel à des solvants organiques tel qu'indiqué plus haut, dont l'élimination constitue une étape coûteuse et dont la manipulation peut s'avérer dangereuse pour le formulateur et pour l'environnement.

La deuxième voie de synthèse de polymères peigne disposant d'une chaîne principale de nature (méth)acrylique sur laquelle sont fixés des groupements latéraux polyoxyalkylés, consiste à copolymériser en milieux solvant ou aqueux un monomère (méth)acrylique et un macromonomère du type polyéther (méth)acrylique, ledit monomère et ledit macromonomère étant initialement apportés en solution.

A ce titre, le document US 2001 001797 décrit un procédé de synthèse de polymères peignes utilisables dans le secteur des ciments, par polymérisation entre un monomère acrylique et un macromonomère qui est préférentiellement un (méth)acrylate d'oxyéthylène et / ou d'oxypropylène et / ou de copolymères d'oxyéthylène et d'oxypropylène sous forme statistique ou sous forme de blocs, ledit monomère et ledit macromonomère étant apportés sous forme de solution aqueuse. De tels polymères permettent d'améliorer les propriétés de fluidité et de retrait des compositions cimentaires dans lesquelles ils sont utilisés.

Parallèlement, le document FR 2 861 399 décrit des polymères peignes obtenus en suspension inverse, par réaction entre un monomère en phase aqueuse qui est l'acide acrylique et un macromonomère en phase solvant qui est préférentiellement le méthacrylate de méthoxy polyéthylène glycol. Le produit résultant est séché et obtenu sous forme de billes : celles-ci sont utilisées dans des compositions cimentaires dont elles permettent d'améliorer la fluidité tout en réduisant leur teneur en eau.

Lorsque la synthèse précédemment décrite de ces polymères met en oeuvre des solvants, l'homme du métier se retrouve à nouveau face aux problèmes de dangerosité et d'élimination desdits solvants. De plus, et de manière plus générale, le prix élevé du macromonomère de départ du type polyéther (méth)acrylique constitue un élément rédhibitoire en vue de diminuer les coûts de production.

Une troisième voie de synthèse de polymères peigne disposant d'une chaîne principale de nature (méth)acrylique sur laquelle sont fixés des groupements latéraux polyoxyalkylés, consiste à copolymériser en milieux solvant ou aqueux un macromonomère vinylique disposant de chaînes pendantes oxyalkylées avec un monomère (méth)acrylique, ledit monomère et ledit macromonomère étant apportés sous forme de solution.

Aussi, le document US 2004 / 235687 enseigne la préparation d'additifs pour ciments, par copolymérisation entre un monomère (méth)acrylique et un macromonomère vinylique disposant de groupements polyoxyalkylène, ledit monomère et ledit macromonomère étant apportés soit en solution aqueuse, soit dans une solution contenant des solvants organiques. Le polymère obtenu est ensuite séché et utilisé comme agent dispersant dans les liants hydrauliques tels que les ciments et les mortiers.

Comme déjà indiqué, lorsque la synthèse de ces polymères met en oeuvre des solvants, elle n'est pas une solution acceptable pour l'homme du métier. Indépendamment de cet argument, cette solution n'est pas non plus satisfaisante pour l'homme du métier, eu égard au prix du macromonomère vinylique de départ.

Il existe une quatrième voie de synthèse de polymères peigne disposant notamment d'une chaîne principale de nature (méth)acrylique sur laquelle sont fixés des groupements latéraux polyoxyalkylés, qui consiste dans le procédé suivant :
a) mélanger une solution d'un homopolymère ou d'un copolymère de l'acide (méth)acrylique, avec un alcoxy polyoxyalkylène glycol ou un alcoxy polyoxyalkylène amine en milieu fondu,
b) éliminer l'eau du mélange,
c) réaliser alors l'estérification de l'homopolymère ou du copolymère de l'acide (méth)acrylique par l'alcoxy polyoxyalkylène glycol, ou son amidification par l'alcoxy polyoxyalkylène amine, en éliminant l'eau résultant de la réaction d'estérification.

La Demanderesse indique que l'expression "produit en milieu fondu" désigne ledit produit présent à une température supérieure à sa température de fusion.

Ainsi, le document EP 1 016 638 décrit-il des agents dispersants pour ciment qui peuvent être obtenus par estérification d'un polymère polycarboxylique par des groupements polyalkylène glycol. Ce document propose néanmoins un certain nombre d'exemples où lesdites réactions d'estérification ont lieu dans un solvant qui est le tétrahydrofurane.

Il existe toutefois des documents qui enseignent des réactions d'estérification d'un acide polycarboxylique dans l'eau. Ainsi, le document FR 2 776 285 décrit-il un procédé de fabrication d'un dispersant hydrosoluble pour liants hydrauliques, par estérification (catalysée par une base) d'un homopolymère ou d'un copolymère de l'acide (méth)acrylique au moyen d'un polyéther contenant un groupe hydroxyle libre. Les exemples de ce document indiquent clairement que les produits sont introduits dans le réacteur sous forme liquide, notamment en dispersion ou en solution aqueuse. Dans une première phase, l'eau de solvatation du polymère est éliminée puis, la réaction d'estérification ayant lieu, l'eau générée par ladite réaction est éliminée au fur et à mesure du degré d'avancement de cette réaction d'estérification. Le dispersant alors obtenu améliore la maniabilité et l'homogénéité des compositions cimentaires dans lesquelles il est utilisé.

Quant au document US 2003 / 148915, il décrit des polymères qui sont obtenus par estérification d'un homopolymère ou d'un copolymère de l'acide (méth)acrylique par des groupements alkylpolyalkylène glycol. Ces deux produits sont introduits sous forme de solutions aqueuses dans le réacteur où a lieu la réaction d'estérification avec élimination de l'eau, l'homopolymère ou le copolymère de l'acide (méth)acrylique ayant été préparé au préalable par polymérisation en solution, en émulsion ou par précipitation.

En ce qui concerne la réaction d'amidification, le document EP 1 577 327 décrit des agents dispersants ou fluidifiants pour ciments qui sont des polymères obtenus par réaction dans un premier temps entre l'acide (méth)acrylique et un composé monohydroxylé, puis par réaction avec une amine primaire. L'acide méthacrylique et le composé monohydroxylé sont introduits sous forme de solution aqueuse, et l'eau est éliminée avant la réaction d'amidification. Le produit final est enfin distillé, séché, puis remis en solution aqueuse.

Par conséquent, les trois premières méthodes de synthèse de polymères peigne disposant d'une chaîne principale de nature (méth)acrylique sur laquelle sont fixés des groupements latéraux polyoxyalkylés précédemment décrites, à savoir :
- la copolymérisation en présence de solvants organiques de l'anhydride maléique avec un autre monomère hydrophobe tel que notamment le styrène, suivie du séchage éventuel du copolymère obtenu, puis de sa fonctionnalisation par des groupements alcoxy poloxyalkylène glycol ou alcoxy polyoxyalkylène amine,
- la copolymérisation en solution aqueuse ou en présence de solvants d'un monomère (méth)acrylique avec un macromonomère du type polyéther (méth)acrylique, ledit monomère et ledit macromonomère étant apportés en solution,
- la copolymérisation en solution aqueuse ou en présence de solvants d'un monomère (méth)acrylique avec un macromonomère vinylique disposant de chaînes pendantes oxyalkylées, ledit monomère et ledit macromonomère étant apportés en solution,

ne donnent pas satisfaction à l'homme du métier, parce qu'elles mettent en oeuvre des solvants organiques qui sont dangereux pour le formulateur et pour l'environnement et qui sont onéreux à éliminer, et / ou parce que ces méthodes mettent en oeuvre un macromonomère dont le coût est élevé.

Aussi, ne demeurent à la disposition de l'homme du métier que les méthodes de préparation basées sur l'estérification ou l'amidification d'un homopolymère ou d'un copolymère de l'acide (méth)acrylique, les produits étant mélangés en solution aqueuse, l'eau étant ensuite éliminée avant que ne débute la réaction estérification ou d'amidification, puis l'eau résultant de la réaction d'estérification ou d'amidification est éliminée pendant la réaction.

Or, dans un souci de productivité, l'homme du métier cherche constamment à améliorer le rendement de ses synthèses, et notamment des réactions qui conduisent aux polymères peigne qu'il cherche à fabriquer. Une telle efficacité peut être définie, par exemple, comme le temps de réaction nécessaire à l'obtention dudit polymère peigne avec un taux de transformation donné, ce taux de transformation étant mesuré par un indice d'acide selon une méthode de titration des fonctions carboxyliques : les fonctions carboxyliques dosées sont les fonctions qui n'ont pas réagi.

Poursuivant ses recherches dans cette direction, la Demanderesse a mis au point un nouveau procédé de fabrication de polymères peignes disposant d'une chaîne principale (méth)acrylique et de groupements latéraux polyoxyalkylés, caractérisé en ce qu'il consiste à :
a) réaliser une solution contenant au moins un homopolymère de l'acide (méth)acrylique et / ou au moins un copolymère de l'acide (méth)acrylique avec au moins un autre monomère,
b) sécher la solution obtenue à l'étape a), en vue d'obtenir un homopolymère de l'acide (méth)acrylique à l'état sec et / ou un copolymère de l'acide (méth)acrylique avec au moins un autre monomère à l'état sec,
c) mélanger le produit à l'état sec obtenu selon l'étape b) avec au moins un alcoxy polyoxyalkylène glycol à l'état fondu et / ou au moins un alcoxy polyoxyalkylène amine à l'état fondu et / ou au moins un oxyde d'alkylène à l'état liquide ou gazeux,
d) fonctionnaliser alors l'homopolymère et / ou le copolymère de l'acide (méth)acrylique par :
   - estérification avec au moins un alcoxy polyoxyalkylène glycol,
   - et / ou amidification avec au moins un alcoxy polyoxyalkylène amine,
   - ou éthoxylation avec au moins un oxyde d'alkylène.

L'état liquide ou gazeux dépend évidemment des conditions de température et de pression dans lesquelles se trouve l'oxyde d'alkylène considéré.

La Demanderesse indique que l'état sec d'un polymère, dans le cas de l'invention, est défini par un taux de matière sèche supérieur à 80 %, préférentiellement supérieur à 85 %, très préférentiellement supérieur à 90 %, et extrêmement préférentiellement supérieur à 95 %, tel que mesuré par une balance-dessicateur commercialisée par la société METTLER-TOLEDO™ sous le nom de HR83, la mesure étant réalisée par séchage à 150°C jusqu'à obtenir une perte en masse inférieure à 1 mg pendant 30 secondes.

De manière tout à fait surprenante, un tel procédé permet d'améliorer sensiblement l'efficacité de la réaction de fonctionnalisation (cette efficacité ayant été définie plus haut) par rapport à l'art antérieur et ce, dans le cas des réactions d'estérification et d'amidification. A titre d'exemple, le document FR 2 776 285 de l'art antérieur, déjà cité dans la présente Demande, décrit dans son exemple n° 1 la synthèse d'un dispersant qui est un polymère de type peigne à base d'acide polyméthacrylique et de méthyl éther de polyéthylène glycol, par un procédé où les matières premières sont apportées sous forme de solution et où l'eau est éliminée au fur et à mesure de la réaction d'estérification, le temps de réaction étant égal à 6 heures et ce, pour obtenir 40 % d'estérification des fonctions carboxyliques. Or, et de manière tout à fait surprenante comme l'illustreront notamment les exemples de la présente Demande, la présente invention permet d'améliorer de manière remarquable un tel rendement.

Ceci signifie que dans le procédé selon l'invention consistant à introduire l'homopolymère ou le copolymère de l'acide (méth)acrylique sous forme sèche dans le milieu fondu contenant les groupements servant à la fonctionnalisation, puis à réaliser ladite fonctionnalisation, l'efficacité de la réaction d'estérification ou d'amidification est largement améliorée. En d'autres termes, le temps de réaction nécessaire à l'obtention du polymère peigne ayant un taux de transformation donné est largement diminué par rapport à ce temps mesuré pour les réactions d'estérification ou d'amidification conduites selon l'art antérieur, c'est-à-dire par mélange dans l'eau de l'homopolymère ou du copolymère de l'acide (méth)acrylique avec les groupements servant à la fonctionnalisation, élimination de l'eau de ce mélange, puis fonctionnalisation.

De plus, le procédé selon l'invention permet l'éthoxylation d'un homopolymère et / ou d'un copolymère de l'acide (méth)acrylique, ce qui est un autre avantage de la présente invention.

Aussi, un premier objet de l'invention est un procédé de fabrication de polymères peignes disposant d'une chaîne principale (méth)acrylique et de groupements latéraux polyoxyalkylés, caractérisé en ce qu'il consiste à :
a) réaliser une solution contenant au moins un homopolymère de l'acide (méth)acrylique et / ou au moins un copolymère de l'acide (méth)acrylique avec au moins un autre monomère,
b) sécher la solution obtenue à l'étape a), en vue d'obtenir un homopolymère de l'acide (méth)acrylique à l'état sec et / ou un copolymère de l'acide (méth)acrylique avec au moins un autre monomère à l'état sec,
c) mélanger le produit à l'état sec obtenu selon l'étape b) avec au moins un alcoxy polyoxyalkylène glycol à l'état fondu et / ou au moins un alcoxy polyoxyalkylène amine à l'état fondu et / ou au moins un oxyde d'alkylène à l'état liquide ou gazeux,
d) fonctionnaliser alors l'homopolymère et / ou le copolymère de l'acide (méth)acrylique par :
   - estérification avec au moins un alcoxy polyoxyalkylène glycol,
   - et / ou amidification avec au moins un alcoxy polyoxyalkylène amine,
   - ou éthoxylation avec au moins un oxyde d'alkylène.

Le procédé selon l'invention est aussi caractérisé en ce que l'alcoxy polyoxyalkylène glycol est préférentiellement un méthoxy polyoxyalkylène glycol, très préférentiellement un méthoxy polyoxyéthylène glycol.

Le procédé selon l'invention est aussi caractérisé en ce que l'alcoxy polyoxyalkylène amine est préférentiellement un méthoxy polyoxyalkylène amine, très préférentiellement un méthoxy polyoxyéthylène amine.

Le procédé selon l'invention est aussi caractérisé en ce que l'oxyde d'alkylène est préférentiellement un oxyde d'éthylène, ou de propylène ou leurs mélanges.

Le procédé selon l'invention est aussi caractérisé en ce que l'homopolymère de l'acide (méth)acrylique et / ou le copolymère de l'acide (méth)acrylique est obtenu par des procédés de polymérisation radicalaire en solution, en émulsion directe, en présence de systèmes catalytiques et d'agents de transfert, ou encore par des procédés de polymérisation radicalaire contrôlée et préférentiellement par la polymérisation contrôlée par des nitroxydes (NMP) ou par des cobaltoximes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Le procédé selon l'invention est aussi caractérisé en ce que l'autre monomère du copolymère de l'acide (méth)acrylique est choisi parmi :
- au moins un monomère anionique à insaturation éthylénique et à fonction monocarboxylique qui est préférentiellement l'acide acrylique ou méthacrylique ou leurs mélanges,
- au moins un monomère à insaturation éthylénique, choisi parmi au moins un monomère à insaturation éthylénique et fonction dicarboxylique et est préférentiellement choisi parmi l'acide crotonique, itaconique, maléique, ou encore les anhydrides d'acides carboxyliques, et est préférentiellement l'anhydride maléique ou choisi parmi les monomères à insaturation éthylénique et à fonction sulfonique et est préférentiellement choisi parmi l'acide 2-acrylamido-2-méthyl-propane-sulfonique, l'acide vinyl sulfonique, ou les sels de l'acide allyl éther sulfonate, l'acide styrène sulfonique ou bien encore choisi parmi les monomères à insaturation éthylénique et à fonction phosphorique et est préférentiellement choisi parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique et est préférentiellement l'acide vinyl phosphonique, ou encore choisi parmi la vinylcaprolactone ou la vinylpyrrolidone, ou leurs mélanges,
- au moins un monomère non hydrosoluble tel que les acrylates ou les méthacrylates d'alkyles, ou leurs mélanges,
ou les mélanges de ces monomères.

Le procédé selon l'invention est aussi caractérisé en ce que le séchage de l'homopolymère et / ou du copolymère de l'acide (méth)acrylique réalisé selon l'étape b) est effectué dans un sécheur par atomisation. Toutefois, l'homme du métier saura recourir à toutes les techniques de séchage bien connues de lui en vue de sécher l'homopolymère et / ou le copolymère au cours de l'étape b).

Le procédé selon l'invention est aussi caractérisé en ce que le séchage de l'homopolymère et / ou du copolymère de l'acide (méth)acrylique réalisé selon l'étape b), est effectué jusqu'à obtenir un taux de matière sèche supérieur à 80 %, préférentiellement supérieur à 85 %, très préférentiellement supérieur à 90 %, et extrêmement préférentiellement supérieur à 95 % du poids dudit homopolymère et / ou dudit copolymère, tel que mesuré par une balance-dessicateur commercialisée par la société METTLER-TOLEDO™ sous le nom de HR83, la mesure étant réalisée par séchage à 150°C jusqu'à obtenir une perte en masse inférieure à 1 mg pendant 30 secondes.

Le procédé selon l'invention est aussi caractérisé en ce qu'il comporte une étape éventuelle e), ultérieure à l'étape d), qui consiste à mettre en solution aqueuse le produit obtenu à l'issu de l'étape d), puis éventuellement à neutraliser totalement ou partiellement ledit produit par un ou plusieurs agents de neutralisation.

Le procédé selon l'invention est aussi caractérisé en ce que les agents de neutralisation sont choisis parmi ceux disposant d'une fonction neutralisante monovalente et sont alors préférentiellement choisis parmi les cations alcalins, et très préférentiellement choisis parmi le sodium, le potassium, le lithium, l'ammonium ou sont préférentiellement choisis parmi les amines primaires, secondaires, tertiaires aliphatiques et / ou cycliques, et très préférentiellement choisis parmi la stéarylamine, les éthanolamines (mono-, di-, triéthanolamine), la mono et diéthylamine, la cyclohexylamine, la méthylcyclohexylamine, l'amino méthyl propanol, la morpholine, ou sont choisis parmi les agents de neutralisation disposant d'une fonction neutralisante divalente et sont préférentiellement choisis parmi les cations divalents alcalino-terreux, et sont très préférentiellement choisis parmi le magnésium, le calcium, le zinc, ou sont choisis parmi les agents de neutralisation disposant d'une fonction neutralisante trivalente et consistent préférentiellement en l'aluminium, ou sont choisis parmi les agents de neutralisation disposant d'une fonction neutralisante plus élevée que la fonction trivalente, ou sont choisis parmi leurs mélanges.

Un deuxième objet de l'invention réside dans les produits secs intermédiaires qui sont les homopolymères de l'acide (méth)acrylique et / ou les copolymères de l'acide (méth)acrylique avec au moins un autre monomère, sous forme sèche, caractérisés en ce qu'ils sont obtenus par la mise en oeuvre des étapes a) et b) du procédé selon l'invention.

Ces produits secs sont aussi caractérisés en ce qu'ils présentent un taux de matière sèche supérieur à 80 %, préférentiellement supérieur à 85 %, très préférentiellement supérieur à 90 %, et extrêmement préférentiellement supérieur à 95 % de leur poids, tel que mesuré par une balance-dessicateur commercialisée par la société METTLER-TOLEDO™ sous le nom de HR83, la mesure étant réalisée par séchage à 150°C jusqu'à obtenir une perte en masse inférieure à 1 mg pendant 30 secondes.

Un troisième objet de l'invention réside dans les polymères peignes, à l'état sec, disposant d'une chaîne principale (méth)acrylique et de groupements latéraux polyoxyalkylés, caractérisés en ce qu'ils sont obtenus par le procédé selon la présente invention (c'est-à-dire bien évidemment, par le procédé selon la présente invention, mais en ne mettant pas en oeuvre l'étape optionnelle e) de mise en solution aqueuse).

Ces polymères peigne, à l'état sec, sont aussi caractérisés en ce qu'ils présentent un taux de matière sèche supérieur à 80 %, préférentiellement supérieur à 85 %, très préférentiellement supérieur à 90 %, et extrêmement préférentiellement supérieur à 95 % de leur poids, tel que mesuré par une balance-dessicateur commercialisée par la société METTLER-TOLEDO™ sous le nom de HR83, la mesure étant réalisée par séchage à 150°C jusqu'à obtenir une perte en masse inférieure à 1 mg pendant 30 secondes

Un quatrième objet de l'invention réside dans les polymères peignes, en solution aqueuse, disposant d'une chaîne principale (méth)acrylique et de groupements latéraux polyoxyalkylés, caractérisés en ce qu'ils sont obtenus par le procédé selon la présente invention, dans lequel on met en oeuvre l'étape e) de mise en solution aqueuse.

Un autre objet de la présente invention réside dans les formulations contenant des matières minérales ou organiques, caractérisées en ce qu'elles contiennent au moins un polymère peigne obtenu par le procédé selon la présente invention.

Ces formulations sont aussi caractérisées en ce que les matières minérales sont choisies parmi le carbonate de calcium naturel ou précipité, les dolomies, le kaolin, le talc, le gypse, la chaux, le ciment, la magnésie, le dioxyde de titane, le blanc satin, le trioxyde d'aluminium ou encore le trihydroxyde d'aluminium, les silices, le mica, le carbonate et le sulfate de baryum, et le mélange de ces matières entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et préférentiellement en ce qu'elle est un carbonate de calcium synthétique ou naturel, ledit carbonate de calcium naturel étant préférentiellement choisi parmi le marbre, la calcite, la craie ou leurs mélanges, ou parmi les oxydes minéraux colorés, et en ce que les matières organiques sont choisies parmi le noir de carbone et les pigments organiques ou leurs mélanges.

Ces formulations sont aussi caractérisées en ce qu'elles consistent en des plastiques contenant des matières minérales ou organiques.

Ces formulations sont aussi caractérisées en ce qu'elles sont des formulations aqueuses contenant des matières minérales ou organiques, lesdites formulations étant choisies parmi des dispersions ou des suspensions aqueuses de matières minérales ou organiques, contenant éventuellement un agent de dispersion et / ou un agent d'aide au broyage et / ou un agent anti sédimentation et / ou un agent épaississant, ou des compositions aqueuses à base de liants hydrauliques, et sont préférentiellement des bétons, des mortiers, des laitiers, des coulis, des plâtres, ou des sauce de couchage papetière, ou des peintures, ou des formulations cosmétiques ou détergentes, ou des formulations textiles, ou des formulations céramiques, ou des boues de forage.

Les exemples suivants permettront de mieux appréhender le contenu de l'invention, sans toutefois en limiter la portée.

### EXEMPLES

### Exemple 1

Cet exemple a pour but d'illustrer la fabrication de polymères peignes disposant d'une chaîne principale (méth)acrylique et de groupements latéraux polyoxyalkylés, selon le procédé selon l'invention.

De manière plus précise, cet exemple illustre la variante selon laquelle l'étape d) est une estérification de la chaîne principale par des groupements alcoxy polyoxyalkylène glycol.

Cet exemple illustre aussi les produits secs intermédiaires obtenus par le procédé selon la présente invention, ainsi que les polymères peigne à l'état sec obtenus par le procédé selon la présente invention.

### Essai n° 1

Cet essai illustre l'art antérieur.

Dans un réacteur en verre de 1 litre muni d'une agitation mécanique, d'un chauffage de type bain d'huile on pèse :
- 350 g de méthoxy polyéthylène glycol de masse moléculaire égale à 5000 g/mole, commercialisé par la société CLARIANT™ sous le nom de Polyglykol™ M 5000, sous forme fondu,
- 0,44 g d'acide p-toluène sulfonique,
- 52,6 g d'un homopolymère de l'acide méthacrylique en solution dans l'eau à 30 % massique, et commercialisé par la société COATEX™ sous le nom TP 941.

L'indice d'acide du mélange est déterminé par dosage acido-basique.
Il est initialement égal à 27,3 mg KOH/g.
Cet indice d'acide correspond à la présence des groupements carboxyliques ; le degré d'avancement de la réaction est donné par la variation de cet indice.

Le mélange est alors chauffé sous agitation jusqu'à 180°C et les indices d'acide sont mesurés périodiquement : les résultats sont indiqués dans le tableau 1.

**Tableau 1**

| **Temps de chauffage (heures)** | **Indice d'acide (mg KOH/g)** | **Moles d'acide consommées** | **Taux de transformation / alcool (%)** |
|---|---|---|---|
| 1 | 24 | 0.02 | 28.6 |
| 2 | 22 | 0.03 | 42.8 |
| 4 | 19.8 | 0.0437 | 62.4 |
| 6 | 18 | 0.054 | 77.1 |
| 8 | 16.7 | 0.0618 | 88.3 |
| 11 | 16.6 | 0.062 | 88.6 |

### Essai n° 2

Cet essai illustre l'invention.

On commence, selon l'étape a) du procédé selon l'invention, par prendre une solution d'un homopolymère de l'acide méthacrylique en solution dans l'eau à 30 % massique, et commercialisé par la société COATEX™ sous le nom TP 941.

Cette solution est ensuite séchée, selon la méthode suivante, qui correspond à l'étape b) du procédé selon l'invention.
La solution de l'homopolymère de l'acide méthacrylique est introduite dans une chambre de pré-chauffage.
On chauffe alors ladite chambre de préchauffage jusqu'à une température de 85°C. Le produit est alors injecté dans la chambre d'atomisation d'un sécheur-atomiseur à travers une buse, sous une pression de 60 bars.
On injecte également dans la chambre d'atomisation de l'air chaud à 300°C, ce qui provoque l'évaporation flash de l'eau de la solution de polymère.
Le rendement de ce séchage est supérieur à 99 %, c'est-à-dire que la masse de polymère sec obtenu après séchage est au moins égale à 99 % de la masse de polymère contenu dans la solution aqueuse de départ.
La température du polymère en sortie est égale à 50°C.
Cette opération de séchage est extrêmement rapide, puisqu'elle ne dure que quelques secondes.
On récupère alors le polymère sous forme d'une poudre sèche.

Ensuite, selon l'étape c) du procédé de l'invention, dans un réacteur en verre de 1 litre muni d'une agitation mécanique et d'un chauffage de type bain d'huile on mélange :
- 350 g de méthoxy polyéthylène glycol de masse moléculaire égale à 5000 g/mole, commercialisé par la société CLARIANT™ sous le nom de Polyglykol™ M 5000, sous forme fondu,
- 0,44 g d'acide p-toluène sulfonique,
- 15,8 g de l'homopolymère de l'acide méthacrylique sec obtenu par la méthode de séchage précédemment décrite.

Selon l'étape d) du procédé de l'invention, intervient alors la réaction d'estérification de l'homopolymère de l'acide méthacrylique par le méthoxy polyéthylène glycol.

L'indice d'acide du mélange est déterminé par dosage acido-basique.
L'indice d'acide de départ est égal à 28,2 mg KOH/g.
Cet indice d'acide correspond à la présence des groupements carboxyliques ; le degré d'avancement de la réaction est donné par la variation de cet indice.

Le mélange est alors chauffé sous agitation jusqu'à 180°C et les indices d'acide sont mesurés périodiquement : les résultats sont indiqués dans le tableau 2.
Lorsqu'on laisse refroidir, on obtient bien le polymère peigne, selon l'invention, à l'état sec.

**Tableau 2**

| **Temps de chauffage (heures)** | **Indice d'acide (mg KOH/g)** | **Moles d'acide consommées** | **Taux de transformation / alcool (%)** |
|---|---|---|---|
| 0,5 | 18,9 | 0,054 | 77,5 |
| 1 | 17,4 | 0,063 | 90 |
| 2 | 16,2 | 0,07 | 100 |

Ces résultats démontrent clairement que le procédé selon l'invention conduit de manière bien plus rapide que le procédé selon l'art antérieur, au polymère peigne recherché : en effet, le taux de transformation mesuré par rapport à l'alcool est égal à 100 % dans le cas de l'essai n° 2 (invention) et ce après seulement 2 heures de réaction, alors qu'il n'atteint que 42,8 % dans le cas de l'essai 1 (art antérieur) au bout de 2 heures, et 88,3 % au bout de 8 heures de réaction.

### Essai n° 3

Cet essai illustre l'invention.

On commence, selon l'étape a) du procédé selon l'invention, par prendre une solution d'un homopolymère de l'acide méthacrylique en solution dans l'eau à 30 % massique, et commercialisé par la société COATEX™ sous le nom TP 941.

Cette solution est ensuite séchée, selon la méthode suivante, qui correspond à l'étape b) du procédé selon l'invention.

Le polymère en solution décrit dans l'essai n° 2 est introduit dans une étuve à 160°C durant 16 heures et la résine sèche obtenue se présente alors sous la forme d'un solide brun.

Ensuite, selon l'étape c) du procédé de l'invention, dans un réacteur en verre de 1 litre muni d'une agitation mécanique et d'un chauffage de type bain d'huile on mélange :
- 350 g de méthoxy polyéthylène glycol de masse moléculaire égale à 5000 g/mole, commercialisé par la société CLARIANT™ sous le nom de Polyglykol™ M 5000, sous forme fondu,
- 0,44 g d'acide p-toluène sulfonique,
- 14 g de l'homopolymère de l'acide méthacrylique obtenu par la méthode de séchage précédemment décrite.

L'indice d'acide du mélange est déterminé par dosage acido-basique.
L'indice d'acide de départ est égal à 28,2 mg KOH/g.
Cet indice d'acide correspond à la présence des groupements carboxyliques ; le degré d'avancement de la réaction est donné par la variation de cet indice.

Le mélange est alors chauffé sous agitation jusqu'à 180°C et les indices d'acide sont mesurés périodiquement : les résultats sont indiqués dans le tableau 3.
Lorsqu'on laisse refroidir, on obtient bien le polymère peigne, selon l'invention, à l'état sec.

**Tableau 3**

| **Temps de chauffage (heures)** | **Indice d'acide (mg KOH/g)** | **Moles d'acide consommées** | **Taux de transformation / alcool (%)** |
|---|---|---|---|
| 3 | 15 | 0,007 | 100 |

Ces résultats démontrent clairement que le procédé selon l'invention conduit de manière bien plus rapide que le procédé selon l'art antérieur, au polymère peigne recherché : en effet, le taux de transformation mesuré par rapport à l'alcool est égal à 100 % dans le cas de l'essai n° 3 (invention) et ce après seulement 3 heures de réaction.

### Exemple 2

Cet exemple a pour but d'illustrer l'utilisation de polymères peigne fabriqués selon le procédé selon l'invention, dans des formulations contenant des matières minérales qui sont des mortiers.

Pour ce faire, on réalise une formulation de mortier témoin par pesée dans le bol d'un mélangeur planétaire pour mortier (Controlab) de 518 g de ciment CEM I 42.5 R HES GAURAIN et 1350 g de sable normalisé EN 196-1.
Ces deux composés sont ensuite mélangés par agitation à 140 tours par minute pendant 30 secondes (T₀ à T₃₀)
Immédiatement après les 30 secondes, on ajoute 315 g d'eau en 30 secondes, l'agitation étant maintenue à 140 tours par minute (T₃₀ à T₆₀).
Après l'ajout de l'eau, l'agitation est maintenue à 140 tours par minute pendant 60 secondes (T₆₀ à T₁₂₀).
L'agitation est ensuite arrêtée pendant 30 secondes (T₁₂₀ à T₁₅₀).
Après ce temps de repos, l'agitation est remise en route à 285 tours par minute pendant 60 secondes (T₁₅₀ à T₂₁₀).

Le mortier obtenu est alors transféré dans un mini cône d'Abrahms afin de déterminer la valeur de retrait mini. La valeur de ce retrait mini est déterminée lorsque le mini cône est soulevé, provoquant l'affaissement du mortier sous forme d'une galette circulaire. La valeur mesurée est la moyenne arrondie de 2 diamètres perpendiculaires sur la galette de mortier résultante. Le résultat est indiqué dans le tableau 1 regroupant les essais.

La formule du mortier témoin (essai n° 3) ci-dessus est répétée en incluant cette fois-ci les 2 polymères à tester (essais n° 4 et 5) qui sont au préalable mélangés à l'eau, un essai étant réalisé pour chacun des polymères obtenus selon les essais n° 1 et 2.
Ces polymères provoquant une baisse sensible de viscosité, la quantité d'eau nécessaire est sensiblement réduite afin d'obtenir un diamètre d'étalement voisin de celui du témoin. La composition de la formulation de mortier est alors de 518 g de ciment CEM I 42.5 R+ HES GAURAIN, 1350 g de sable normalisé EN 196-1, 270 g d'eau et 0,906 g du polymère à tester.

Les résultats obtenus ainsi que les paramètres des essais sont résumés dans le tableau 4.

**Tableau 4**

| **Composés de la formulation** | **Essai n° 3** (témoin sans polymère) | **Essai n° 4** (polymère de l'art antérieur selon l'essai n° 1) | **Essai n° 5** (polymère de l'invention selon l'essai n° 2) |
|---|---|---|---|
| Ciment CEM I 42.5 R HES GAURAIN | 518 g | 518 g | 518 g |
| Sable normalisé EN 196-1 | 1350 g | 1350 g | 1350 g |
| Eau | 315 g | 270 g | 270 g |
| Matière sèche du polymère à tester | -- | 38.1 % | 42.1 % |
| Masse de polymère en l'état utilisée | 0 | 2.38 g | 2.15 g |
| Masse de polymère sec utilisée | 0 | 0.906 g | 0.906 g |
| Moyenne des 2 diamètres d'étalement | 33 cm | 28.75 cm | 28.5 cm |

Les diamètres d'étalement des trois polymères sont quasi identiques ce qui démontre que l'efficacité du polymère selon l'invention n'est pas altérée par sa méthode de synthèse qui correspond au procédé objet de la présente Demande.

### Exemple 3

Cet exemple a pour but d'illustrer la fabrication de polymères peignes disposant d'une chaîne principale à base d'un copolymère (méth)acrylique et de groupements latéraux polyoxyalkylés, selon le procédé selon l'invention. De manière plus précise, cet exemple illustre la variante selon laquelle l'étape d) est une estérification de la chaîne principale par des groupements alcoxy polyoxyalkylène glycol. Cet exemple illustre aussi les produits secs intermédiaires obtenus par le procédé selon la présente invention, ainsi que les polymères peigne à l'état sec obtenus par le procédé selon la présente invention.

### Essai n° 6

Cet essai illustre l'art antérieur.

Dans un réacteur en verre de 1 litre muni d'une agitation mécanique, d'un chauffage de type bain d'huile on pèse :
- 350 g du même méthoxy polyéthylène glycol que celui de l'essai n° 1, sous forme fondu,
- 0,45 g d'acide p-toluène sulfonique,
- 60 g d'une solution aqueuse à 25 % massique d'un copolymère acide acrylique / acide méthacrylique (10 / 90 en % en mole).

Le mélange est ensuite chauffé sous agitation jusqu'à 180°C, et selon la méthode décrite dans l'exemple 1.

### Essai n° 6 bis

Cet essai illustre l'invention.
On commence, selon l'étape a) du procédé selon l'invention, par prendre une solution d'un copolymère acide acrylique / acide méthacrylique (10 / 90 en % en mole).
Cette solution est ensuite séchée, selon la méthode décrite dans l'essai n° 2, qui correspond à l'étape b) du procédé selon l'invention. On récupère alors le polymère sous forme d'une poudre sèche.

Ensuite, selon l'étape c) du procédé de l'invention, dans un réacteur en verre de 1 litre muni d'une agitation mécanique et d'un chauffage de type bain d'huile on mélange :
- 350 g du même méthoxy polyéthylène glycol que celui mis en oeuvre dans l'essai n° 2, sous forme fondu,
- 0,45 g d'acide p-toluène sulfonique,
- 15,0 g du copolymère de l'acide acrylique et de l'acide méthacrylique obtenu par la méthode de séchage précédemment décrite.

Selon l'étape d) du procédé de l'invention, intervient alors la réaction d'estérification de l'homopolymère de l'acide méthacrylique par le méthoxy polyéthylène glycol. Le mélange est ensuite chauffé sous agitation jusqu'à 180°C. Lorsqu'on laisse refroidir, on obtient bien le polymère peigne, selon l'invention, à l'état sec.

Pour les essais n° 6 et 6 bis, on détermine en fonction du temps le taux de transformation en % par rapport à l'alcool (tableau 5).

**Tableau 5**

| Essai n° 6 | | Essai n° 6 bis | |
|---|---|---|---|
| Temps de chauffage (heures) | Taux de transformation / alcool (%) | Temps de chauffage (heures) | Taux de transformation / alcool (%) |
| 1 | 30.1 | 0 | 0 |
| 2 | 43.4 | 1 | 92.2 |
| 4 | 61.2 | 2 | 99.5 |
| 6 | 75.6 | 3 | 100 |
| 8 | 89.4 | - | - |

Ces résultats démontrent clairement que le procédé selon l'invention conduit de manière bien plus rapide que le procédé selon l'art antérieur, au polymère peigne recherché.

### Essai n° 7

Cet essai illustre l'art antérieur.

Dans un réacteur en verre de 1 litre muni d'une agitation mécanique, d'un chauffage de type bain d'huile on pèse :
- 350 g du même méthoxy polyéthylène glycol que celui de l'essai n° 1, sous forme fondu,
- 0,42 g d'acide p-toluène sulfonique,
- 80 g d'une solution aqueuse à 20 % massique d'un copolymère styrène / acide méthacrylique (3 / 97 en % en mole).

Le mélange est ensuite chauffé sous agitation jusqu'à 180°C, et selon la méthode décrite dans l'exemple 1.

### Essai n° 7 bis

Cet essai illustre l'invention.
On commence, selon l'étape a) du procédé selon l'invention, par prendre une solution aqueuse d'un copolymère styrène / acide méthacrylique (3 / 97 en % en mole).
Cette solution est ensuite séchée, selon la méthode décrite dans l'essai n° 2, qui correspond à l'étape b) du procédé selon l'invention. On récupère alors le polymère sous forme d'une poudre sèche.
Ensuite, selon l'étape c) du procédé de l'invention, dans un réacteur en verre de 1 litre muni d'une agitation mécanique et d'un chauffage de type bain d'huile on mélange :
- 350 g du même méthoxy polyéthylène glycol que celui mis en oeuvre dans l'essai n° 2, sous forme fondu,
- 0,42 g d'acide p-toluène sulfonique,
- 20,0 g du copolymère de l'acide acrylique et de l'acide méthacrylique obtenu par la méthode de séchage précédemment décrite.

Selon l'étape d) du procédé de l'invention, intervient alors la réaction d'estérification de l'homopolymère de l'acide méthacrylique par le méthoxy polyéthylène glycol. Le mélange est ensuite chauffé sous agitation jusqu'à 180°C. Lorsqu'on laisse refroidir, on obtient bien le polymère peigne, selon l'invention, à l'état sec.

Pour les essais n° 7 et 7 bis, on détermine en fonction du temps le taux de transformation en % par rapport à l'alcool (tableau 6).

**Tableau 6**

| Essai n° 7 | | Essai n° 7 bis | |
|---|---|---|---|
| Temps de chauffage (heures) | Taux de transformation / alcool (%) | Temps de chauffage (heures) | Taux de transformation / alcool (%) |
| 1 | 32.1 | 0 | 0 |
| 2 | 44.0 | 1 | 93.4 |
| 4 | 59.8 | 2 | 100 |
| 6 | 74.2 | - | - |
| 8 | 90.1 | - | - |

Ces résultats démontrent clairement que le procédé selon l'invention conduit de manière bien plus rapide que le procédé selon l'art antérieur, au polymère peigne recherché.

### Essai n° 8

Cet essai illustre l'art antérieur.
Dans un réacteur en verre de 1 litre muni d'une agitation mécanique, d'un chauffage de type bain d'huile on pèse :
- 350 g du même méthoxy polyéthylène glycol que celui de l'essai n° 1, sous forme fondu,
- 0,44 g d'acide p-toluène sulfonique,
- 80 g d'une solution aqueuse à 30 % massique d'un copolymère acide itaconique / acide méthacrylique (5 / 95 en % en mole).

Le mélange est ensuite chauffé sous agitation jusqu'à 180°C, et selon la méthode décrite dans l'exemple 1.

### Essai n° 8 bis

Cet essai illustre l'invention.
On commence, selon l'étape a) du procédé selon l'invention, par prendre une solution aqueuse d'un copolymère acide itaconique / acide méthacrylique (5 / 95 en % en mole).
Cette solution est ensuite séchée, selon la méthode décrite dans l'essai n° 2, qui correspond à l'étape b) du procédé selon l'invention. On récupère alors le polymère sous forme d'une poudre sèche.

Ensuite, selon l'étape c) du procédé de l'invention, dans un réacteur en verre de 1 litre muni d'une agitation mécanique et d'un chauffage de type bain d'huile on mélange :
- 350 g du même méthoxy polyéthylène glycol que celui mis en oeuvre dans l'essai n° 2, sous forme fondu,
- 0,44 g d'acide p-toluène sulfonique,
- 24,0 g du copolymère de l'acide acrylique et de l'acide méthacrylique obtenu par la méthode de séchage précédemment décrite.

Selon l'étape d) du procédé de l'invention, intervient alors la réaction d'estérification de l'homopolymère de l'acide méthacrylique par le méthoxy polyéthylène glycol. Le mélange est ensuite chauffé sous agitation jusqu'à 180°C. Lorsqu'on laisse refroidir, on obtient bien le polymère peigne, selon l'invention, à l'état sec.

Pour les essais n° 8 et 8 bis, on détermine en fonction du temps le taux de transformation en % par rapport à l'alcool (tableau 7).

**Tableau 7**

| Essai n° 8 | | Essai n° 8 bis | |
|---|---|---|---|
| Temps de chauffage (heures) | Taux de transformation / alcool (%) | Temps de chauffage (heures) | Taux de transformation / alcool (%) |
| 1 | 31.7 | 0 | 0 |
| 2 | 45.6 | 1 | 92.8 |
| 4 | 62.3 | 2 | 100 |
| 6 | 77.9 | - | - |
| 8 | 94.3 | - | - |

Ces résultats démontrent clairement que le procédé selon l'invention conduit de manière bien plus rapide que le procédé selon l'art antérieur, au polymère peigne recherché.

### Exemple 4

Cet exemple a pour but d'illustrer la fabrication de polymères peignes disposant d'une chaîne principale à base d'un copolymère (méth)acrylique et de groupements latéraux polyoxyalkylés, selon le procédé selon l'invention. De manière plus précise, cet exemple illustre la variante selon laquelle l'étape d) est une estérification ou une amidification. Cet exemple illustre aussi les produits secs intermédiaires obtenus par le procédé selon la présente invention, que les polymères peigne à l'état sec obtenus par le procédé selon la présente invention et leur mise en oeuvre dans la fabrication de mortiers.

### Essai n° 9

Cet essai illustre l'art antérieur. Il correspond à la synthèse, selon la même méthode que celle décrite dans l'essai n° 1, d'un polymère peigne constitué de :
- 80 % en mole d'acide méthacrylique,
- 20 % en mole de méthoxy polyéthylène glycol de masse moléculaire égale à 750 g/mole.

### Essai n° 9 bis

Cet essai illustre l'invention. Il correspond à la synthèse, selon la même méthode que celle décrite dans l'essai n° 2, d'un polymère peigne constitué de :
- 80 % en mole d'acide méthacrylique,
- 20 % en mole de méthoxy polyéthylène glycol de masse moléculaire égale à 750 g/mole.

### Essai n° 10

Cet essai illustre l'art antérieur. Il correspond à la synthèse, selon la même méthode que celle décrite dans l'essai n° 1, d'un polymère peigne constitué de :
- 85 % en mole d'acide méthacrylique,
- 15 % en mole de méthoxy polyéthylène glycol de masse moléculaire égale à 2000 g/mole.

### Essai n° 10 bis

Cet essai illustre l'invention. Il correspond à la synthèse, selon la même méthode que celle décrite dans l'essai n° 2, d'un polymère peigne constitué de :
- 85 % en mole d'acide méthacrylique,
- 15 % en mole de méthoxy polyéthylène glycol de masse moléculaire égale à 2000 g/mole.

### Essai n° 11

Cet essai illustre l'art antérieur. Il correspond à la synthèse, selon la même méthode que celle décrite dans l'essai n° 1, d'un polymère peigne constitué de :
- 85 % en mole d'acide méthacrylique,
- 15 % en mole de méthoxy polyéthylène glycol de masse moléculaire égale à 2000 g/mole.

### Essai n° 11 bis

Cet essai illustre l'invention. Il correspond à la synthèse, selon la même méthode que celle décrite dans l'essai n° 2, d'un polymère peigne constitué de :
- 85 % en mole d'acide méthacrylique,
- 15 % en mole de méthoxy polyéthylène glycol de masse moléculaire égale à 2000 g/mole.

### Essai n° 12

Cet essai illustre l'art antérieur. Il correspond à la synthèse, selon la même méthode que celle décrite dans l'essai n° 1, d'un polymère peigne constitué de :
- 85 % en mole d'acide méthacrylique,
- 15 % en mole de méthoxy polyéthylène glycol amine de masse moléculaire égale à 2000 g/mole.

### Essai n° 12 bis

Cet essai illustre l'invention. Il correspond à la synthèse, selon la même méthode que celle décrite dans l'essai n° 2, à la différence près que l'étape c) du procédé selon l'invention est une amidification et non pas une estérification, d'un polymère peigne constitué de :
- 80 % en mole d'acide méthacrylique,
- 20 % en mole de méthoxy polyéthylène glycol amine de masse moléculaire égale à 2000 g/mole.

L'ensemble des polymères correspondant aux essais n° 10 à 12 et 10 bis à 12 bis ont été testés dans des formulations de mortier, selon le même protocole que celui décrit dans l'exemple 2.
Les résultats correspondant apparaissent dans le tableau 8.

**Tableau 8**

| **Composés de la formulation** | **10** | **10 bis** | **11** | **11 bis** | **12** | **12 bis** |
|---|---|---|---|---|---|---|
| Ciment CEM I 42.5 R HES GAURAIN | 518 g | 518 g | 518 g | 518 g | 518 g | 518 g |
| Sable normalisé EN 196-1 | 1350 g | 1350 g | 1350 g | 1350 g | 1350 g | 1350 g |
| Eau | 220 g | 220 g | 220 g | 220 g | 220 g | 220 g |
| Masse de polymère sec utilisée | 0.906 g | 0.906 g | 0.906 g | 0.906 g | 0.906 g | 0.906 g |
| Moyenne des 2 diamètres d'étalement | 23.2 cm | 23.1 cm | 2.16 cm | 26.3 cm | 11.3 cm | 11.4 cm |

Les diamètres d'étalement des trois polymères sont quasi identiques ce qui démontre que l'efficacité du polymère selon l'invention n'est pas altérée par sa méthode de synthèse qui correspond au procédé objet de la présente Demande.

## Revendications

1. Procédé de fabrication de polymères peignes disposant d'une chaîne principale (méth)acrylique et de groupements latéraux polyoxyalkylés, **caractérisé en ce qu'**il consiste à :
a) réaliser une solution contenant au moins un homopolymère de l'acide (méth)acrylique et / ou au moins un copolymère de l'acide (méth)acrylique avec au moins un autre monomère,
b) sécher la solution obtenue à l'étape a), en vue d'obtenir un homopolymère de l'acide (méth)acrylique à l'état sec et / ou un copolymère de l'acide (méth)acrylique avec au moins un autre monomère à l'état sec,
c) mélanger le produit à l'état sec obtenu selon l'étape b) avec au moins un alcoxy polyoxyalkylène glycol à l'état fondu et / ou au moins un alcoxy polyoxyalkylène amine à l'état fondu et / ou au moins un oxyde d'alkylène à l'état liquide ou gazeux,
d) fonctionnaliser alors l'homopolymère et / ou le copolymère de l'acide (méth)acrylique par :
- estérification avec au moins un alcoxy polyoxyalkylène glycol, qui est préférentiellement un méthoxy polyoxyalkylène glycol, très préférentiellement un méthoxy polyoxyéthylène glycol,
- et / ou amidification avec au moins un alcoxy polyoxyalkylène amine, qui est préférentiellement un méthoxy polyoxyalkylène amine, très préférentiellement un méthoxy polyoxyéthylène amine,
- et / ou éthoxylation avec au moins un oxyde d'alkylène, qui est préférentiellement un oxyde d'éthylène, ou de propylène, ou leurs mélanges.

2. Procédé selon la revendication 1, **caractérisé en ce que** l'homopolymère de l'acide (méth)acrylique et / ou le copolymère de l'acide (méth)acrylique est obtenu par des procédés de polymérisation radicalaire en solution, en émulsion directe en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

3. Procédé selon l'une des revendications 1 ou 2, **caractérisé en ce que** l'autre monomère du copolymère de l'acide (méth)acrylique est choisi parmi :
- au moins un monomère anionique à insaturation éthylénique et à fonction monocarboxylique qui est préférentiellement l'acide acrylique ou méthacrylique ou leurs mélanges,
- au moins un monomère à insaturation éthylénique, choisi parmi au moins un monomère à insaturation éthylénique et fonction dicarboxylique et est préférentiellement choisi parmi l'acide crotonique, itaconique, maléique, ou encore les anhydrides d'acides carboxyliques, et est préférentiellement l'anhydride maléique ou choisi parmi les monomères à insaturation éthylénique et à fonction sulfonique et est préférentiellement choisi parmi l'acide 2-acrylamido-2-méthyl-propane-sulfonique, l'acide vinyl sulfonique ou l'acide styrène sulfonique ou bien encore choisi parmi les monomères à insaturation éthylénique et à fonction phosphorique et est préférentiellement choisi parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique et est préférentiellement l'acide vinyl phosphonique, ou leurs mélanges,
- au moins un monomère non hydrosoluble tel que les acrylates ou les méthacrylates d'alkyles, ou leurs mélanges,
ou les mélanges de ces monomères.

4. Procédé selon l'une des revendications 1 à 3, **caractérisé en ce que** le séchage de l'homopolymère et / ou du copolymère de l'acide (méth)acrylique réalisé selon l'étape b) est effectué dans un sécheur par atomisation.

5. Procédé selon l'une des revendications 1 à 4, **caractérisé en ce que** le séchage de l'homopolymère et / ou du copolymère de l'acide (méth)acrylique réalisé selon l'étape b), est effectué jusqu'à obtenir un taux de matière sèche supérieur à 80 %, préférentiellement supérieur à 85 %, très préférentiellement supérieur à 90 %, et extrêmement préférentiellement supérieur à 95 % du poids dudit homopolymère et / ou dudit copolymère, tel que mesuré par une balance-dessicateur commercialisée par la société METTLER-TOLEDO™ sous le nom de HR83, la mesure étant réalisée par séchage à 150°C jusqu'à obtenir une perte en masse inférieure à 1 mg pendant 30 secondes.

6. Procédé selon l'une des revendications 1 à 5, **caractérisé en ce qu'**il comporte une étape éventuelle e), ultérieure à l'étape d), qui consiste à mettre en solution aqueuse le produit obtenu à l'issu de l'étape d), puis éventuellement à neutraliser totalement ou partiellement ledit produit par un ou plusieurs agents de neutralisation, choisis parmi ceux disposant d'une fonction neutralisante monovalente et sont alors préférentiellement choisis parmi les cations alcalins, et très préférentiellement choisis parmi le sodium, le potassium, le lithium, l'ammonium ou sont préférentiellement choisis parmi les amines primaires, secondaires, tertiaires aliphatiques et / ou cycliques, et très préférentiellement choisis parmi la stéarylamine, les éthanolamines (mono-, di-, triéthanolamine), la mono et diéthylamine, la cyclohexylamine, la méthylcyclohexylamine, l'amino méthyl propanol, la morpholine, ou sont choisis parmi les agents de neutralisation disposant d'une fonction neutralisante divalente et sont préférentiellement choisis parmi les cations divalents alcalino-terreux, et sont très préférentiellement choisis parmi le magnésium, le calcium, le zinc, ou sont choisis parmi les agents de neutralisation disposant d'une fonction neutralisante trivalente et consistent préférentiellement en l'aluminium, ou sont choisis parmi les agents de neutralisation disposant d'une fonction neutralisante plus élevée que la fonction trivalente, ou sont choisis parmi leurs mélanges.

7. Produits secs intermédiaires qui sont les homopolymères de l'acide (méth)acrylique et / ou les copolymères de l'acide (méth)acrylique avec au moins un autre monomère, sous forme sèche, **caractérisés en ce qu'**ils sont obtenus par la mise en oeuvre des étapes a) et b) du procédé selon la revendication 5, et **en ce qu'**ils présentent un taux de matière sèche supérieur à 80 %, préférentiellement supérieur à 85 %, très préférentiellement supérieur à 90 %, et extrêmement préférentiellement supérieur à 95 % de leur poids, tel que mesuré par une balance-dessicateur commercialisée par la société METTLER-TOLEDO™ sous le nom de HR83, la mesure étant réalisée par séchage à 150°C jusqu'à obtenir une perte en masse inférieure à 1 mg pendant 30 secondes, et **caractérisé en ce que** lorsqu'il est présent l'autre monomère du copolymère de l'acide (méth)acrylique est choisi parmi :
- au moins un monomère anionique à insaturation éthylénique et à fonction monocarboxylique qui est préférentiellement l'acide acrylique ou méthacrylique ou leurs mélanges,
- au moins un monomère à insaturation éthylénique, choisi parmi au moins un monomère à insaturation éthylénique et fonction dicarboxylique et est préférentiellement choisi parmi l'acide crotonique, itaconique, maléique, ou encore les anhydrides d'acides carboxyliques, et est préférentiellement l'anhydride maléique ou choisi parmi les monomères à insaturation éthylénique et à fonction sulfonique et est préférentiellement choisi parmi l'acide 2-acrylamido-2-méthyl-propane-sulfonique, l'acide vinyl sulfonique ou l'acide styrène sulfonique ou bien encore choisi parmi les monomères à insaturation éthylénique et à fonction phosphorique et est préférentiellement choisi parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique et est préférentiellement l'acide vinyl phosphonique, ou leurs mélanges,
- au moins un monomère non hydrosoluble tel que les acrylates ou les méthacrylates d'alkyles, ou leurs mélanges,
ou les mélanges de ces monomères.

8. Polymères peignes, à l'état sec, disposant d'une chaîne principale (méth)acrylique et de groupements latéraux polyoxyalkylés, **caractérisés en ce qu'**ils sont obtenus par le procédé selon la revendication 5 et lorsqu'il est présent l'autre monomère du copolymère de l'acide (méth)acrylique est choisi parmi :
- au moins un monomère anionique à insaturation éthylénique et à fonction monocarboxylique qui est préférentiellement l'acide acrylique ou méthacrylique ou leurs mélanges,
- au moins un monomère à insaturation éthylénique, choisi parmi au moins un monomère à insaturation éthylénique et fonction dicarboxylique et est préférentiellement choisi parmi l'acide crotonique, itaconique, maléique, ou encore les anhydrides d'acides carboxyliques, et est préférentiellement l'anhydride maléique ou choisi parmi les monomères à insaturation éthylénique et à fonction sulfonique et est préférentiellement choisi parmi l'acide 2-acrylamido-2-méthyl-propane-sulfonique, l'acide vinyl sulfonique ou l'acide styrène sulfonique ou bien encore choisi parmi les monomères à insaturation éthylénique et à fonction phosphorique et est préférentiellement choisi parmi l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique et est préférentiellement l'acide vinyl phosphonique, ou leurs mélanges,
- au moins un monomère non hydrosoluble tel que les acrylates ou les méthacrylates d'alkyles, ou leurs mélanges,
ou les mélanges de ces monomères,
et **caractérisé en ce qu'**ils présentent un taux de matière sèche supérieur à 80 %, préférentiellement supérieur à 85 %, très préférentiellement supérieur à 90 %, et extrêmement préférentiellement supérieur à 95 % de leur poids, tel que mesuré par une balance-dessicateur commercialisée par la société METTLER-TOLEDO™ sous le nom de HR83, la mesure étant réalisée par séchage à 150°C jusqu'à obtenir une perte en masse inférieure à 1 mg pendant 30 secondes.

9. Polymères peignes, en solution aqueuse, disposant d'une chaîne principale (méth)acrylique et de groupements latéraux polyoxyalkylés, **caractérisés en ce qu'**ils sont obtenus par le procédé selon la revendication 6.

10. Formulations contenant des matières minérales ou organiques, **caractérisées en ce qu'**elles contiennent au moins un polymère peigne selon l'une des revendications 1 à 9.

11. Formulations selon la revendication 10, **caractérisées en ce que** les matières minérales sont choisies parmi le carbonate de calcium naturel ou précipité, les dolomies, le kaolin, le talc, le gypse, la chaux, le ciment, la magnésie, le dioxyde de titane, le blanc satin, le trioxyde d'aluminium ou encore le trihydroxyde d'aluminium, les silices, le mica, le carbonate et le sulfate de baryum, et le mélange de ces matières entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et préférentiellement **en ce qu'**elle est un carbonate de calcium synthétique ou naturel, ledit carbonate de calcium naturel étant préférentiellement choisi parmi le marbre, la calcite, la craie ou leurs mélanges, ou parmi les oxydes minéraux colorés, et **en ce que** les matières organiques sont choisies parmi le noir de carbone et les pigments organiques ou leurs mélanges.

12. Formulations selon l'une des revendications 10 ou 11, **caractérisées en ce qu'**elles sont choisies parmi des plastiques contenant des matières minérales ou organiques, des dispersions ou des suspensions aqueuses de matières minérales ou organiques, contenant éventuellement un agent de dispersion et / ou un agent d'aide au broyage, des compositions aqueuses à base de liants hydrauliques, et plus préférentiellement des bétons, des mortiers, des laitiers, des coulis, des plâtres, des sauces de couchage papetière, des peintures, des formulations cosmétiques, des formulations détergentes, des formulations textiles, des formulations céramiques ou encore des boues de forage.

## Patentansprüche

1. Verfahren zur Herstellung von Kammpolymeren mit einer (Meth)acryl-Hauptkette und polyalkoxylierten Seitengruppen, **dadurch gekennzeichnet, dass** es aus Folgendem besteht:
a) Herstellung einer Lösung, die mindestens ein (Meth)acrylsäure-Homopolymer und/oder mindestens ein Copolymer von (Meth)acrylsäure mit mindestens einem anderen Monomer enthält,
b) Trocknen der in Schritt a) erhaltenen Lösung zum Erhalt eines (Meth)acrylsäure-Homopolymers in trockenem Zustand und/oder eines Copolymers von (Meth)acrylsäure mit mindestens einem anderen Monomer in trockenem Zustand,
c) Mischen des gemäß Schritt b) erhaltenen Produkts in trockenem Zustand mit mindestens einem Alkoxypolyoxyalkylenglykol in schmelzflüssigem Zustand und/oder mindestens einem Alkoxypolyoxyalkylenamin in schmelzflüssigem Zustand und/oder mindestens einem Alkylenoxid in flüssigem oder gasförmigem Zustand,
d) anschließendes Funktionalisieren des (Meth)acrylsäure-Homopolymers und/oder -Copolymers durch:
- Veresterung mit mindestens einem Alkoxypolyoxyalkylenglykol, bei dem es sich vorzugsweise um ein Methoxypolyoxyalkylenglykol und besonders bevorzugt um ein Methoxypolyoxyethylenglykol handelt,
- und/oder Amidierung mit mindestens einem Alkoxypolyoxyalkylenamin, bei dem es sich vorzugsweise um ein Methoxypolyoxyalkylenamin und besonders bevorzugt um ein Methoxypolyoxyethylenamin handelt,
- und/oder Ethoxylierung mit mindestens einem Alkylenoxid, bei dem es sich vorzugsweise um ein Ethylenoxid oder Propylenoxid oder Mischungen davon handelt.

2. Verfahren nach Anspruch 1, **dadurch gekennzeichnet, dass** das (Meth)acrylsäure-Homopolymer und/oder das (Meth)acrylsäure-Copolymer durch Verfahren der radikalischen Polymerisation in Lösung oder in direkter Emulsion in Gegenwart von katalytischen Systemen und Kettenübertragungsmitteln oder auch durch Verfahren der kontrollierten radikalischen Polymerisation und vorzugsweise durch Polymerisation, die mit Nitroxiden (NMP) oder mit Cobaloximen kontrolliert wird, durch radikalische Atomtransferpolymerisation (ATRP), durch radikalische Polymerisation, die mit Schwefelderivaten, die aus Carbamaten, Dithioestern oder Trithiocarbonaten (RAFT) oder Xanthogenaten ausgewählt sind, kontrolliert wird, erhalten wird.

3. Verfahren nach einem der Ansprüche 1 oder 2, **dadurch gekennzeichnet, dass** das andere Monomer des (Meth)acrylsäure-Copolymers ausgewählt wird aus:
- mindestens einem monocarboxylfunktionellen ethylenisch ungesättigten anionischen Monomer, bei dem es sich vorzugsweise um Acrylsäure oder Methacrylsäure oder Mischungen davon handelt,
- mindestens einem ethylenisch ungesättigten Monomer, ausgewählt aus mindestens einem dicarboxylfunktionellen ethylenisch ungesättigten Monomer, das vorzugsweise aus Crotonsäure, Itaconsäure und Maleinsäure ausgewählt wird, oder auch Carbonsäureanhydriden, wobei es sich vorzugsweise um Maleinsäureanhydrid handelt, oder aus sulfonsäurefunktionellen ethylenisch ungesättigten Monomeren, die vorzugsweise aus 2-Acrylamido-2-methylpropansulfonsäure, Vinylsulfonsäure oder Styrolsulfonsäure ausgewählt werden, oder auch aus phosphorsäurefunktionellen ethylenisch ungesättigten Monomeren, die vorzugsweise aus Vinylphosphorsäure, Ethylenglykolmethacrylatphosphat, Propylenglykolmethacrylatphosphat, Ethylenglykolacrylatphosphat, Propylenglykolacrylatphospat und deren Ethoxylaten ausgewählt werden, oder auch aus phosphorsäurefunktionellen ethylenisch ungesättigten Monomeren, wobei es sich vorzugsweise um Vinylphosphonsäure handelt, oder Mischungen davon,
- mindestens einem nicht wasserlöslichen Monomer wie Alkylacrylaten oder -methacrylaten, oder Mischungen davon,
oder Mischungen dieser Monomere.

4. Verfahren nach einem der Ansprüche 1 bis 3, **dadurch gekennzeichnet, dass** die Trocknung des gemäß Schritt b) hergestellten (Meth)acrylsäure-Homopolymers und/oder -Copolymers in einem Trockner durch Zerstäubung erfolgt.

5. Verfahren nach einem der Ansprüche 1 bis 4, **dadurch gekennzeichnet, dass** die Trocknung des gemäß Schritt b) hergestellten (Meth)acrylsäure-Homopolymers und/oder -Copolymers bis zum Erhalt eines Trockensubstanzgehalts von mehr als 80 Gew.-%, vorzugsweise mehr als 85 Gew.-%, besonders bevorzugt mehr als 90 Gew.-% und ganz besonders bevorzugt mehr als 95 Gew.-% des Homopolymers und/oder Copolymers gemäß Messung auf einem von der Firma METTLER-TOLEDO™ unter dem Namen HR83 vertriebenen gravimetrischen Feuchtigkeitsmessgerät erfolgt, wobei die Messung durch Trocknen bei 150°C bis zum Erhalt eines Masseverlusts von weniger als 1 mg über einen Zeitraum von 30 Sekunden durchgeführt wird.

6. Verfahren nach einem der Ansprüche 1 bis 5, **dadurch gekennzeichnet, dass** es einen fakultativen Schritt e) nach Schritt d) umfasst, der darin besteht, dass das am Ende von Schritt d) erhaltene Produkt in wässrige Lösung gebracht und das Produkt dann gegebenenfalls mit einem oder mehreren Neutralisationsmitteln, die aus denjenigen mit einer einwertigen neutralisierenden Funktion und daher vorzugsweise aus Alkalikationen und besonders bevorzugt aus Natrium, Kalium, Lithium und Ammonium oder vorzugsweise aus primären, sekundären und tertiären aliphatischen und/oder cyclischen Aminen und besonders bevorzugt aus Stearylamin, den Ethanolaminen (Mono-, Di- und Triethanolamin), Mono- und Diethylamin, Cyclohexylamin, Methylcyclohexylamin, Aminomethylpropanol und Morpholin oder aus Neutralisationsmitteln mit einer zweiwertigen neutralisierenden Funktion und vorzugsweise aus zweiwertigen Erdalkalikationen und besonders bevorzugt aus Magnesium, Calcium und Zink oder aus Neutralisationsmitteln mit einer dreiwertigen neutralisierenden Funktion, die vorzugsweise aus Aluminium bestehen, oder aus Neutralisationsmitteln mit einer neutralisierenden Funktion, die höher als die dreiwertige Funktion ist, oder aus Mischungen davon ausgewählt werden, vollständig oder teilweise neutralisiert wird.

7. Trockene Zwischenprodukte, bei denen es sich um (Meth)acrylsäure-Homopolymere und/oder Copolymere von (Meth)acrylsäure mit mindestens einem anderen Monomer in trockener Form handelt, **dadurch gekennzeichnet, dass** sie durch die Durchführung der Schritte a) und b) des Verfahrens gemäß Anspruch 5 erhalten werden und dass sie einen Trockensubstanzgehalt von mehr als 80 Gew.-%, vorzugsweise mehr als 85 Gew.-%, besonders bevorzugt mehr als 90 Gew.-% und ganz besonders bevorzugt mehr als 95 Gew.-% des Homopolymers und/oder Copolymers gemäß Messung auf einem von der Firma METTLER-TOLEDO™ unter dem Namen HR83 vertriebenen gravimetrischen Feuchtigkeitsmessgerät aufweisen, wobei die Messung durch Trocknen bei 150°C bis zum Erhalt eines Masseverlusts von weniger als 1 mg über einen Zeitraum von 30 Sekunden durchgeführt wird, und **dadurch gekennzeichnet, dass** das Monomer des (Meth)acrylsäure-Copolymers, wenn es vorhanden ist, ausgewählt ist aus:
- mindestens einem monocarboxylfunktionellen ethylenisch ungesättigten anionischen Monomer, bei dem es sich vorzugsweise um Acrylsäure oder Methacrylsäure oder Mischungen davon handelt,
- mindestens einem ethylenisch ungesättigten Monomer, ausgewählt aus mindestens einem dicarboxylfunktionellen ethylenisch ungesättigten Monomer, das vorzugsweise aus Crotonsäure, Itaconsäure und Maleinsäure ausgewählt wird, oder auch Carbonsäureanhydriden, wobei es sich vorzugsweise um Maleinsäureanhydrid handelt, oder aus sulfonsäurefunktionellen ethylenisch ungesättigten Monomeren, die vorzugsweise aus 2-Acrylamido-2-methylpropansulfonsäure, Vinylsulfonsäure oder Styrolsulfonsäure ausgewählt werden, oder auch aus phosphorsäurefunktionellen ethylenisch ungesättigten Monomeren, die vorzugsweise aus Vinylphosphorsäure, Ethylenglykolmethacrylatphosphat, Propylenglykolmethacrylatphosphat, Ethylenglykolacrylatphosphat, Propylenglykolacrylatphospat und deren Ethoxylaten ausgewählt werden, oder auch aus phosphorsäurefunktionellen ethylenisch ungesättigten Monomeren, wobei es sich vorzugsweise um Vinylphosphonsäure handelt, oder Mischungen davon,
- mindestens einem nicht wasserlöslichen Monomer wie Alkylacrylaten oder -methacrylaten, oder Mischungen davon,
oder Mischungen dieser Monomere.

8. Kammpolymere in trockenem Zustand mit einer (Meth)acryl-Hauptkette und polyalkoxylierten Seitengruppen, **dadurch gekennzeichnet, dass** sie durch das Verfahren gemäß Anspruch 5 erhalten werden und das Monomer des (Meth)acrylsäure-Copolymers, wenn es vorhanden ist, ausgewählt ist aus:
- mindestens einem monocarboxylfunktionellen ethylenisch ungesättigten anionischen Monomer, bei dem es sich vorzugsweise um Acrylsäure oder Methacrylsäure oder Mischungen davon handelt,
- mindestens einem ethylenisch ungesättigten Monomer, ausgewählt aus mindestens einem dicarboxylfunktionellen ethylenisch ungesättigten Monomer, das vorzugsweise aus Crotonsäure, Itaconsäure und Maleinsäure ausgewählt werden, oder auch Carbonsäureanhydriden, wobei es sich vorzugsweise um Maleinsäureanhydrid handelt, oder aus sulfonsäurefunktionellen ethylenisch ungesättigten Monomeren, die vorzugsweise aus 2-Acrylamido-2-methylpropansulfonsäure, Vinylsulfonsäure oder Styrolsulfonsäure ausgewählt werden, oder auch aus phosphorsäurefunktionellen ethylenisch ungesättigten Monomeren, die vorzugsweise aus Vinylphosphorsäure, Ethylenglykolmethacrylatphosphat, Propylenglykolmethacrylatphosphat, Ethylenglykolacrylatphosphat, Propylenglykolacrylatphospat und deren Ethoxylaten ausgewählt werden, oder auch aus phosphorsäurefunktionellen ethylenisch ungesättigten Monomeren, wobei es sich vorzugsweise um Vinylphosphonsäure handelt, oder Mischungen davon,
- mindestens einem nicht wasserlöslichen Monomer wie Alkylacrylaten oder -methacrylaten, oder Mischungen davon,
oder Mischungen dieser Monomere,
und **dadurch gekennzeichnet, dass** sie einen Trockensubstanzgehalt von mehr als 80 Gew.-%, vorzugsweise mehr als 85 Gew.-%, besonders bevorzugt mehr als 90 Gew.-% und ganz besonders bevorzugt mehr als 95 Gew.-% davon gemäß Messung auf einem von der Firma METTLER-TOLEDO™ unter dem Namen HR83 vertriebenen gravimetrischen Feuchtigkeitsmessgerät aufweisen, wobei die Messung durch Trocknen bei 150°C bis zum Erhalt eines Masseverlusts von weniger als 1 mg über einen Zeitraum von 30 Sekunden durchgeführt wird.

9. Kammpolymere in wässriger Lösung mit einer (Meth)acryl-Hauptkette und polyalkoxylierten Seitengruppen, **dadurch gekennzeichnet, dass** sie durch das Verfahren gemäß Anspruch 6 erhalten werden.

10. Formulierungen, enthaltend anorganische oder organische Substanzen, **dadurch gekennzeichnet, dass** sie mindestens ein Kammpolymer gemäß einem der Ansprüche 1 bis 9 enthalten.

11. Formulierungen nach Anspruch 10, **dadurch gekennzeichnet, dass** die anorganischen Substanzen aus natürlichem oder gefälltem Calciumcarbonat, Dolomiten, Kaolin, Talk, Gips, Kalk, Zement, Magnesiumoxid, Titandioxid, Satinweiß, Aluminiumtrioxid oder auch Aluminiumtrihydroxid, Siliciumdioxiden, Glimmer, Bariumcarbonat, Bariumsulfat und einer Mischung dieser Substanzen untereinander, wie Mischungen von Talk und Calciumcarbonat, Calciumcarbonat und Kaolin oder auch Mischungen von Calciumcarbonat mit Aluminiumtrihydroxid oder Aluminiumtrioxid, oder auch Mischungen mit Kunst- oder Naturfasern oder auch Costrukturen von Mineralien wie Costrukturen von Talk und Calciumcarbonat oder Talk und Titandioxid, oder Mischungen davon ausgewählt sind und es sich vorzugsweise um ein synthetisches oder natürliches Calciumcarbonat handelt, wobei das natürliche Calciumcarbonat vorzugsweise aus Marmor, Calcit, Kreide oder Mischungen davon ausgewählt ist, oder aus farbigen anorganischen Oxiden ausgewählt sind und die organischen Substanzen aus Ruß und organischen Pigmenten oder Mischungen davon ausgewählt sind.

12. Formulierungen nach einem der Ansprüche 10 oder 11, **dadurch gekennzeichnet, dass** sie aus Kunststoffen, die anorganische oder organische Substanzen enthalten, wässrigen Dispersionen oder Suspensionen von anorganischen oder organischen Substanzen, die gegebenenfalls ein Dispergiermittel und/oder ein Mahlhilfsmittel enthalten, wässrigen Zusammensetzungen auf Basis von hydraulischen Bindemitteln und weiter bevorzugt Betonen, Mörteln, Schlacken, Breien, Putzen, Papierstreichmassen, Anstrichmitteln, kosmetischen Formulierungen, Wasch- oder Reinigungsformulierungen, Textilformulierungen, Keramikformulierungen oder auch Bohrschlämmen ausgewählt sind.

## Claims

1. Method for manufacturing comb polymers having a principal (meth)acrylic chain and polyoxyalkylated lateral groups, **characterized in that** it consists in:
a) producing a solution containing at least one homopolymer of (meth)acrylic acid and/or at least one copolymer of (meth)acrylic acid with at least one other monomer,
b) drying the solution obtained in stage a), with a view to obtaining a homopolymer of (meth)acrylic acid in the dry state and/or a copolymer of (meth)acrylic acid with at least one other monomer in the dry state,
c) blending the product in the dry state obtained according to stage b) with at least one alcoxy polyoxyalkylene glycol in the molten state and/or at least one alcoxy polyoxyalkylene amine in the molten state and/or at least one alkylene oxide in the liquid or gaseous state,
d) then functionalising the homopolymer and/or copolymer of (meth)acrylic acid by:
- esterification with at least one alcoxy polyoxyalkylene glycol, which is preferentially a methoxy polyoxyalkylene glycol, very preferentially a methoxy polyoxyethylene glycol,
- and/or amidification with at least one alcoxy polyoxyalkylene amine, which is preferentially a methoxy polyoxyalkylene amine, very preferentially a methoxy polyoxyethylene amine,
- and/or ethoxylation with at least one alkylene oxide, which is preferentially an ethylene or propylene oxide, or their blends

2. Method according to claim 1, **characterized in that** the homopolymer of (meth)acrylic acid and/or the copolymer of (meth)acrylic acid is obtained by processes of radical polymerisation in solution, in direct emulsion, in the presence of catalytic systems and transfer agents, or again by processes of controlled radical polymerisation and preferentially by nitroxide mediated polymerisation (NMP) or by cobaloximes, by atom transfer radical polymerisation (ATRP), by controlled radical polymerisation by sulphurated derivatives, chosen from among carbamates, dithioesters or trithiocarbonates (RAFT) or xanthates.

3. Method according to one of claims 1 or 2, **characterized in that** the other monomer of the copolymer of (meth)acrylic acid is chosen from among:
- at least one anionic monomer with ethylenic unsaturation and with a monocarboxylic function which is preferentially acrylic or methacrylic acid, or their blends,
- at least one monomer with ethylenic unsaturation, chosen from among at least one monomer with ethylenic unsaturation and a dicarboxylic function, and is preferentially chosen from among crotonic, itaconic, maleic acid, or again the anhydrides of carboxylic acids, and is preferentially maleic anhydride or chosen from among the monomers with ethylenic unsaturation and with a sulfonic function and is preferentially chosen from among 2-acrylamido-2-methyl-propane-sulfonic acid, vinyl sulfonic acid or styrene sulfonic acid, or indeed chosen from among the monomers with ethylenic unsaturation and with a phosphoric function, and is preferentially chosen from among vinyl phosphoric acid, ethylene glycol methacrylate phosphate, propylene glycol methacrylate phosphate, ethylene glycol acrylate phosphate, propylene glycol acrylate phosphate and their ethoxylates, or as well as chosen from among the monomers with ethylenic unsaturation and a phosphonic function, and is preferentially vinyl phosphonic acid, or their blends,
- at least one non water-soluble monomer such as the alkyl acrylates or methacrylates, or their blends,
or the blends of these monomers.

4. Method according to one of claims 1 to 3, **characterized in that** the drying of the homopolymer and/or of the copolymer of (meth)acrylic acid obtained according to stage b) is undertaken in a dryer by atomisation.

5. Method according to one of claims 1 to 4, **characterized in that** the drying of the homopolymer and/or of the copolymer of (meth)acrylic acid accomplished according to stage b), is undertaken until a dry solid content rate of over 80% is obtained, preferentially over 85%, very preferentially over 90%, and extremely preferentially over 95%, of the weight of the said homopolymer and/or of the said copolymer, as measured by a desiccator-balance sold by the company METTLER-TOLEDO™ under the name HR83, where the measurement is made by drying at 150°C until a mass loss of less than 1 mg in 30 seconds is obtained.

6. Method according to one of claims 1 to 5, **characterized in that** it has a possible stage e), after step d), that consists in including in aqueous solution the product obtained at the end of step d), then possibly neutralising totally or partially said product by one or several neutralisation agents, chosen from among those having a monovalent neutralising function, and are then preferentially chosen from among the alkaline cations, and very preferentially chosen from among sodium, potassium, lithium or ammonium, or are preferentially chosen from among the primary, secondary, tertiary aliphatic and/or cyclic amines, and very preferentially chosen from among stearylamine, the ethanolamines (mono-, di-, triethanolamine), mono and diethylamine, cyclohexylamine, methylcyclohexylamine, amino methyl propanol, morpholine, or are chosen from among the neutralisation agents having a divalent neutralising function, and are preferentially chosen from among the alkaline earth divalent cations, and are very preferentially chosen from among magnesium, calcium, zinc, or are chosen from among the neutralisation agents having a trivalent neutralising function, and preferentially consist of aluminium, or are chosen from among the neutralisation agents having a neutralising function higher than the trivalent function, or are chosen from among their blends.

7. Intermediate dry products which are the homopolymers of (meth)acrylic acid and/or the copolymers of (meth)acrylic acid with at least one other monomer, in the dry form, **characterized in that** they are obtained by the use of stages a) and b) of the method according to claim 5, **characterized in that** they have a dry solid content rate of over 80%, preferentially over 85%, very preferentially over 90%, and extremely preferentially over 95%, of their weight, as measured by a desiccator-balance sold by the company METTLER-TOLEDO™ under the name HR83, where the measurement is made by drying at 150°C until a mass loss of less than 1 mg is obtained over 30 seconds, and **characterized in that** when it is present, the other monomer of the copolymer of the (meth)acrylic acid is chosen from among:
- at least one anionic monomer with ethylenic unsaturation and with a monocarboxylic function which is preferentially acrylic or methacrylic acid, or their blends,
- at least one monomer with ethylenic unsaturation, chosen from among at least one monomer with ethylenic unsaturation and a dicarboxylic function, and is preferentially chosen from among crotonic, itaconic, maleic acid, or again the anhydrides of carboxylic acids, and is preferentially maleic anhydride or chosen from among the monomers with ethylenic unsaturation and with a sulfonic function and is preferentially chosen from among 2-acrylamido-2-methyl-propane-sulfonic acid, vinyl sulfonic acid, or styrene sulfonic acid, or as well as chosen from among the monomers with ethylenic unsaturation and with a phosphoric function, and is preferentially chosen from among vinyl phosphoric acid, ethylene glycol methacrylate phosphate, propylene glycol methacrylate phosphate, ethylene glycol acrylate phosphate, propylene glycol acrylate phosphate and their ethoxylates, or indeed chosen from among the monomers with ethylenic unsaturation and a phosphonic function, and is preferentially vinyl phosphonic acid, or their blends,
- at least one non water-soluble monomer such as the alkyl acrylates or methacrylates, or their blends,
or the blends of these monomers.

8. Comb polymers, in the dry state, having a principal (meth)acrylic chain and polyoxyalkylated lateral groups, **characterized in that** they are obtained by the method according to claim 5 and when it is present, the other monomer of the copolymer of the (meth)acrylic acid is chosen from among:
- at least one anionic monomer with ethylenic unsaturation and with a monocarboxylic function which is preferentially acrylic or methacrylic acid, or their blends,
- at least one monomer with ethylenic unsaturation, chosen from among at least one monomer with ethylenic unsaturation and a dicarboxylic function, and is preferentially chosen from among crotonic, itaconic, maleic acid, or again the anhydrides of carboxylic acids, and is preferentially maleic anhydride or chosen from among the monomers with ethylenic unsaturation and with a sulfonic function and is preferentially chosen from among 2-acrylamido-2-methyl-propane-sulfonic acid, vinyl sulfonic acid, or styrene sulfonic acid, or as well as chosen from among the monomers with ethylenic unsaturation and with a phosphoric function, and is preferentially chosen from among vinyl phosphoric acid, ethylene glycol methacrylate phosphate, propylene glycol methacrylate phosphate, ethylene glycol acrylate phosphate, propylene glycol acrylate phosphate and their ethoxylates, or indeed chosen from among the monomers with ethylenic unsaturation and a phosphonic function, and is preferentially vinyl phosphonic acid, or their blends,
- at least one non water-soluble monomer such as the alkyl acrylates or methacrylates, or their blends, or the blends of these monomers,
and **characterized in that** they have a dry matter rate of over 80%, preferentially over 85%, very preferentially over 90%, and extremely preferentially over 95%, of their weight, as measured by a desiccator-balance sold by the company METTLER-TOLEDO™ under the name HR83, where the measurement is made by drying at 150°C until a mass loss of less than 1 mg is obtained over 30 seconds.

9. Comb polymers, in aqueous solution, having a principal (meth)acrylic chain and polyoxyalkylated lateral groups, **characterized in that** they are obtained by the method according to claim 6.

10. Formulations containing mineral or organic matters, **characterized in that** they contain at least one comb polymer according to one of claims 1 to 9.

11. Formulations according to claim 10, **characterized in that** the mineral matters are chosen from among natural or precipitated calcium carbonate, dolomites, kaolin, talc, gypsum, lime, cement, magnesia, titanium dioxide, satin white, aluminium trioxide or again aluminium trihydroxide, silicas, mica, barium carbonate and sulphate, and the blend of these matters between them, such as talc-calcium carbonate, calcium carbonate-kaolin, or again blends of calcium carbonate with aluminium trihydroxide or aluminium trioxide, or again blends with synthetic or natural fibres, or again mineral co-structures such as talc-calcium carbonate or talc-titanium dioxide co-structures, or their blends, and preferentially **in that** it is a synthetic or natural calcium carbonate, where the said natural calcium carbonate is chosen preferentially from among marble, calcite, chalk or their blends, or from among the coloured mineral oxides, and **in that** the organic matters are chosen from among carbon black and organic pigments or their blends.

12. Formulations according to one of claims 10 or 11, **characterized in that** they are chosen from plastics containing mineral or organic matters, aqueous dispersions or suspensions of mineral or organic matters, possibly containing a dispersing agent and/or a grinding aid agent, aqueous compositions based on hydraulic binders, and more preferentially concretes, mortars, slags, grouts, plasters, paper coating colours, paints, cosmetic formulations, detergent formulations, textile formulations, ceramic formulations, or also drilling muds.
